# EUROPEAN PATENT SPECIFICATION

(11) **EP 4 497 530 B1**
(45) Date of publication and mention of the grant of the patent: **04.11.2026**
(21) Application number: 24180285.9
(22) Date of filing: 05.06.2024
(51) Int. Cl.: B23K 101/00, B23K 26/40, B23K 26/146, B23K 26/382

(54) **MACHINING OF CERAMIC MATRIX COMPOSITES WITH CURVED WATERJET GUIDED LASER**
BEARBEITUNG VON KERAMIKMATRIXVERBUNDSTOFFEN MIT GEKRÜMMTEM WASSERSTRAHLGEFÜHRTEM LASER
USINAGE DE COMPOSITES À MATRICE CÉRAMIQUE AVEC LASER COURBÉ GUIDÉ PAR JET D'EAU

(30) Priority: 23.06.2023 US 202318213537
(43) Date of publication of application: 29.01.2025
(73) Proprietor: RTX Corporation, Farmington, CT 06032 (US)
(72) Inventor: WANG, Zhigang, East Hartford, 06118 (US); KUCZEK, Andrzej E., East Hartford, 06118 (US); FERNANDEZ, Robin H., East Hartford, 06118 (US); BARRON, Alan C., East Hartford, 06118 (US); ABDI, Ahmed Abdillahi, East Hartford, 06118 (US); NELSON, Jason, East Hartford, 06118 (US); LAZUR, Andrew Joseph, East Hartford, 06118 (US)
(74) Representative: Dehns

(56) References cited:
- CN-B- 113 894 444
- HUANG YUXING ET AL: "Study on the mechanisms of curved water jet fiber-guided laser technology", THE INTERNATIONAL JOURNAL OF ADVANCED MANUFACTURING TECHNOLOGY, vol. 112, no. 11-12, 13 January 2021 (2021-01-13), pages 3137 - 3150, XP037359003, ISSN: 0268-3768, DOI: 10.1007/S00170-020-06552-8

## Description

### BACKGROUND

The present invention relates to ceramic matrix composites (CMCs), and more particularly, to means of machining CMCs.

CMCs are extremely hard and brittle and can therefore be hard to machine efficiently. Waterjet guided laser is considered as a promising manufacturing route for producing complex 3D holes. However, due to the non-contact nature of laser ablation, it can be difficult to generate a toolpath for complex 3D shapes with existing computer aided manufacturing (CAM) systems, which subsequently limits its application for 3D machining. Thus, it is necessary to develop a method to overcome the disadvantages.

Huang Yuxing et al: "Study on the mechanisms of curved water jet fiber-guided laser technology", The International Journal of Advanced Manufacturing Technology, vol. 112, no. 11-12, 13 January 2021 (2021-01-13), pages 3137-3150, XP037359003, discloses a prior art method of machining a feature in a workpiece as set forth in the preamble of claim 1.

CN 113 894 444B discloses a prior art water-guided pulsed laser processing system and method based on interference optical path design.

### SUMMARY

From one aspect, there is provided a method of machining a feature in a workpiece as recited in claim 1.

There is also provided a system for machining a feature in a workpiece as recited in claim 12.

Features of embodiments are set forth in the dependent claims.

### BRIEF DESCRIPTION OF THE DRAWINGS

FIG. 1 is a simplified illustration of a waterjet guided laser device.
FIG. 2 is a simplified illustration of a waterjet guided laser device with at least one electrode.
FIG. 3 is a top-down view of drilling system including the waterjet guided laser device of FIG. 2.
FIG. 4 is a simplified illustration of a waterjet guided laser device with multiple electrode pairs.
FIG. 5 is a simplified illustration of a metering hole and a spiral pattern used to drill a portion of the metering hole.
FIG. 6 is a simplified illustration of the waterjet guided laser device of FIG. 4 forming a curved cooling hole in a workpiece.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the appended claims. The figures may not be drawn to scale, and applications and embodiments of the present invention may include features and components not specifically shown in the drawings.

### DETAILED DESCRIPTION

This disclosure presents means for controlling waterjet trajectory for machining 3D features (e.g., holes, pockets, slots, etc.) in CMCs, which makes it possible to use waterjet guided laser for machining complex 3D shaped features using a continuous toolpath. This improves the efficiency of the laser machining process, especially when the approach is used for machining 3D shaped holes. By accurately controlling waterjet trajectory, this technology could also be used to machine non-line-of-sight features.

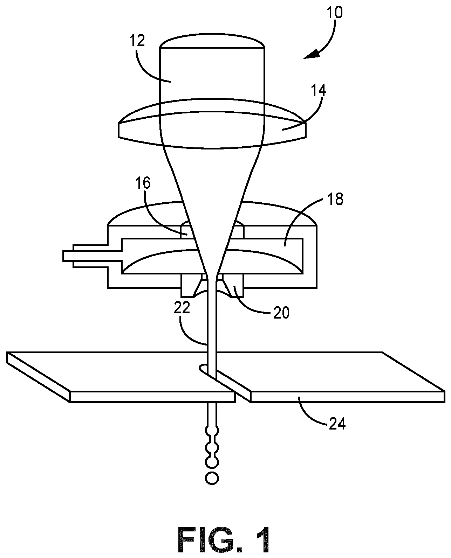

FIG. 1 is a simplified illustration of waterjet guided laser device 10. Device 10 includes laser beam 12 from a laser source, focusing lens 14, window 16, pressurized water chamber 18, and nozzle 20. In operation, laser beam 12 is focused by focusing lens 14 and window 16 as it reaches pressurized water chamber 18, filled with pressurized water. Cylindrical waterjet 22 with internally reflected laser beam 12 is ejected from nozzle 20 and impinges upon workpiece 24 causing removal of workpiece material along a predetermined tool path.

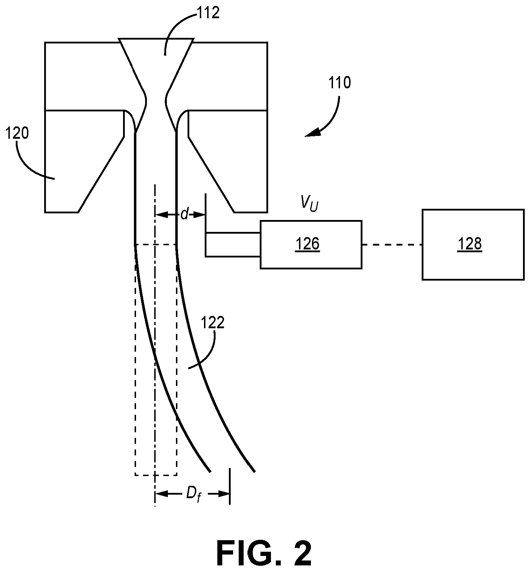

FIG. 2 is a simplified illustration of waterjet guided laser device 110 in the region of nozzle 120. Device 110 is substantially similar to device 10, except that device 110 includes at least one electrode 126 downstream of nozzle. Electrode 126 can be controlled to create a non-uniform electric field to deflect, or bend waterjet 122 by dielectrophoresis (DEP). DEP occurs when a polarizable particle is suspended in a non-uniform electric field. The electric field polarizes the particle and the poles then experience a force along the field lines, which can be either attractive or repulsive according to the orientation on the dipole. As shown in FIG. 2, d represents the distance between electrode 126 and the centerline of waterjet 122 and *D_{f}* is the deflection of waterjet 122. Deflection can generally be estimated by the equation ${D}_{f} = C \frac{{Vu}^{2}}{dP}$*,* where *V*_{U} is the applied voltage, P is the pressure of waterjet 122, and C is a constant depending on the electric field. Accordingly, it is possible to deflect waterjet 122 without moving the source of laser beam 112 by keeping d and P fixed, and selectively changing the applied voltage *V*_{U}, as is discussed in greater detail below. In one example, voltage control can be carried out using an amplifier with an output voltage ranging from 0 V to 1400 V, a slew rate of 370 V/µs, and a large signal bandwidth greater than 125 kHz. Such an amplifier could be included as part of control module 128, which can be operably connected to device 110 to control the operation of waterjet 122 and electrode(s) 126.

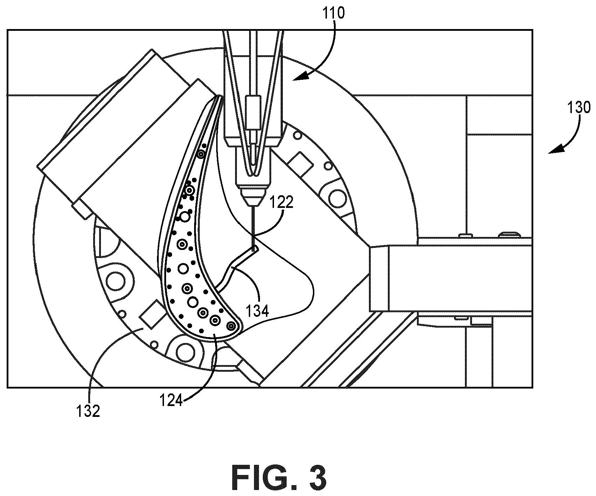

FIG. 3 is a top-down view of drilling system 130 which includes device 110 and holder 132 for securing workpiece 124. In the embodiment shown, workpiece 124 is an airfoil. Waterjet 122 of device 110 can be selectively deflected, as discussed above, to drill non-line of sight metering holes 134 in workpiece 124 without the need to frequently reposition device 110 or workpiece 124 relative to one another, which can lead to misalignment between a non-deflected waterjet 122 and the axes of metering holes 134. In some cases, workpiece 124 can remain static while metering holes are drilled by deflection of waterjet 122 with minimal movement of device 110 required. This can be preferable as the mass of system 130 presents inertial challenges with respect to the tool paths necessary to drill complex features (e.g., holes 132). Accordingly, the relatively low inertia of waterjet 122 allows it to be more responsive to directional changes.

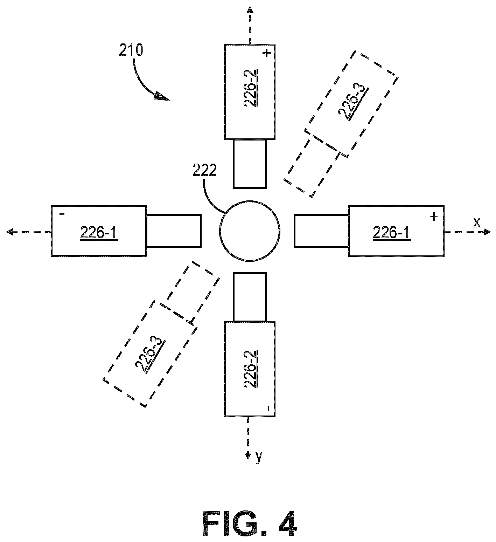

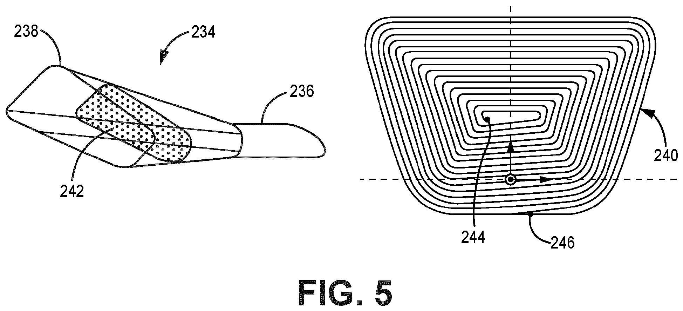

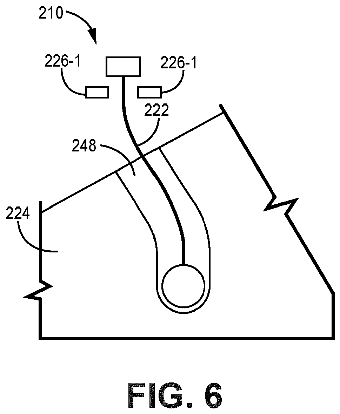

FIG. 4 is a simplified illustration of waterjet guided laser device 210 with multiple electrodes for deflecting waterjet 222. Device 210 is otherwise substantially similar to devices 10 and 110. Device 210 includes first electrode pair 226-1 oriented along the x-axis, and second electrode pair 226-2 oriented along the y-axis. Each electrode pair 226-1 is oppositely disposed relative to water jet 222, and each electrode pair 226-2 is also oppositely disposed relative to waterjet 222. Each electrode pair 226-1 and 226-2 can have a positive (+) electrode and a negative (-) electrode. It should be noted that device 210 can include additional electrode pairs (e.g., 226-3, represented by dashed lines, to 226-*n*) variably offset from the x and y-axes. Device 110 can be similarly configured. Device 210 may be preferable for creating intricate spiral patterns or curved holes in a workpiece, as is discussed below with respect to FIGS. 5 and 6.

FIG. 5 is a simplified illustration of metering hole 234 having metering section 236 and diffuser section 238. FIG. 5 also illustrates spiral pattern 240, which corresponds to cross-sectional plane 242 of diffuser section 238. Spiral pattern 240 can be formed by the inside-out movement of waterjet 222 from point 244 to point 246. However, rather than translating device 210 along a corresponding spiral tool path, electrode pairs 226-1 and 226-2 can be selectively operated to deflect the waterjet in a spiral tool path in the x-y plane without the need to translate the underlying workpiece, and with little to no movement of device 210 required. Other sectional planes corresponding to metering section 236 and diffuser section 238 can be similarly drilled to form metering hole 234. FIG. 6 is a simplified illustration of a portion of waterjet guided laser device 210 forming curved cooling hole 248 in workpiece 224, which can be an airfoil or other component for a gas turbine engine. Only first electrode pair 226-1 is visible in FIG. 6.

To form holes 234 or 248, a control module (e.g., control module 128) can operate to variably apply voltage to electrode pairs 226-1 and 226-2 according to a pre-programmed tool path. The combination of the positively charged and negatively charged electrodes of a given pair (e.g., 226-1) can deflect waterjet 222 in the same direction, as one acts to repel and the other to attract waterjet 222. It can also be possible to configure device 210 such that the polarity of a given pair of electrodes can be reversed, as necessary, to achieve maximum deflection and/or changes in direction. As such, an applied DC voltage, or DC-biased AC voltage can be preferable. In addition to controlling the electric field via the voltage applied to individual electrodes and/or polarity across a given pair, the frequency ω and amplitude *V*₀ of the applied voltage can also be controlled (e.g., varied) to influence the direction and/or degree of deflection. For example, if the applied voltage ${V}_{U} = {V}_{0} sin \left(\frac{ωt}{2}\right)$, then deflection ${D}_{f} = C \frac{{V}_{u}^{2}}{dP} = C \frac{{V}_{0}^{2}}{dP} {sin}^{2} \frac{ωt}{2} = C \frac{{V}_{0}^{2}}{dP} \frac{1 - cos ωt}{2}$*.* Such means of controlling the electric field therefore allow deflection of waterjet 222 to follow the tool path necessary to machine complex features.

The disclosed waterjet guided laser devices can be used to form non-line of sight and/or complexly shaped holes in CMC components for use in aerospace, maritime, or industrial equipment, to name a few, non-limiting examples.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of machining a feature (134; 234; 248) in a workpiece (124; 224), the method comprising:
orienting a waterjet guided laser device (110; 210) about the workpiece (124; 224);
ejecting a waterjet (122; 222) from a nozzle (120) of the waterjet guided laser device (110; 210);
impinging the waterjet (122; 222) against the workpiece (124; 224) along a tool path causing a corresponding removal of material therefrom; and
generating a non-uniform electric field proximate the waterjet (122; 222) to cause a deflection of the waterjet (122; 222) as the waterjet (122; 222) is impinging against the workpiece (124; 224), wherein generating the non-uniform electric field comprises selectively applying a voltage to at least one electrode (126; 226-1, 226-2, 226-3), the at least one electrode (126; 226-1, 226-2, 226-3) positioned downstream of the nozzle (120),
**characterised in that**
the at least one electrode (226-1, 226-2, 226-3) comprises a first electrode pair (226-1) disposed along a first axis (x) and a second electrode pair (226-2) disposed along an orthogonal second axis (y).

2. The method of claim 1, wherein the voltage ranges from 0 V to 1400 V.

3. The method of claim 1 or 2, wherein generating the non-uniform electric field comprises selectively applying a voltage to the first electrode pair (226-1) and the second electrode pair (226-2).

4. The method of claim 3, wherein generating the non-uniform electric field further comprises varying at least one of a frequency and an amplitude of the voltage.

5. The method of any preceding claim, wherein generating the non-uniform electric field comprises reversing a polarity of the first electrode pair (226-1) or of the second electrode pair (226-2).

6. The method of any preceding claim, wherein the tool path forms a curved cooling hole (134; 234; 248).

7. The method of any preceding claim, wherein the tool path forms a spiral pattern (240).

8. The method of any preceding claim, and further comprising: mounting the workpiece (124; 224) in a holder (132) and keeping the workpiece (124; 224) stationary while impinging the waterjet (122; 222) against the workpiece (124; 224).

9. The method of any preceding claim, wherein the deflection of the waterjet (122; 222) follows the tool path.

10. The method of claim 9, wherein generating the non-uniform electric field comprises:
applying a voltage to the at least one electrode (126; 226-1, 226-2, 226-3); and
controlling at least one of an amplitude or a frequency of the voltage.

11. The method of claim 10, wherein the voltage ranges from 0 to 1400 V.

12. A system (130) for machining a feature (138; 234; 248) in a workpiece (124; 224), the system comprising:
a holder (132) for securing the workpiece (124; 224);
a waterjet guided laser device (110; 210) translatable relative to the workpiece (124; 224), the waterjet guided laser device (110; 210) comprising:
a nozzle (120) for ejecting a waterjet (122; 222), the waterjet (122; 222) comprising a laser beam (112); and
at least one electrode (126; 226-1, 226-2, 226-3) disposed downstream of the nozzle (120); and
a control module (128) operatively connected to the waterjet guided laser device (110; 210) for selectively applying a voltage at a desired frequency to the at least one electrode (126; 226-1, 226-2, 226-3) to cause deflection of the waterjet (122; 222) corresponding to a tool path,
**characterised in that**
the at least one electrode (226-1, 226-2, 226-3) comprises a first electrode pair (226-1) disposed along a first axis (x) and a second electrode pair (226-2) disposed along an orthogonal second axis (y).

13. The system of claim 12, wherein the voltage ranges from 0 to 1400.

14. The system of any of claims 12 or 13, wherein the voltage is one of a DC voltage and a DC-biased AC voltage.

## Patentansprüche

1. Verfahren zum Bearbeiten eines Merkmals (134; 234; 248) in einem Werkstück (124; 224), wobei das Verfahren umfasst:
Ausrichten einer wasserstrahlgeführten Laservorrichtung (110; 210) um das Werkstück (124; 224);
Ausstoßen eines Wasserstrahls (122; 222) aus einer Düse (120) der wasserstrahlgeführten Laservorrichtung (110; 210);
Aufprallen des Wasserstrahls (122; 222) auf das Werkstück (124; 224) entlang eines Werkzeugpfads, was zu einer entsprechenden Materialentfernung davon führt; und
Erzeugen eines nicht-uniformen elektrischen Feldes in der Nähe des Wasserstrahls (122; 222), um eine Ablenkung des Wasserstrahls (122; 222) zu bewirken, während der Wasserstrahl (122; 222) auf das Werkstück (124; 224) aufprallt, wobei das Erzeugen des nicht-uniformen elektrischen Feldes das selektive Anlegen einer Spannung an mindestens eine Elektrode (126; 226-1, 226-2, 226-3) umfasst, wobei die mindestens eine Elektrode (126; 226-1, 226-2, 226-3) stromabwärts der Düse (120) positioniert ist,
**dadurch gekennzeichnet, dass**
die mindestens eine Elektrode (226-1, 226-2, 226-3) ein erstes Elektrodenpaar (226-1), das entlang einer ersten Achse (x) angeordnet ist, und ein zweites Elektrodenpaar (226-2), das entlang einer orthogonalen zweiten Achse (y) angeordnet ist, umfasst.

2. Verfahren nach Anspruch 1, wobei die Spannung von 0 V bis 1400 V reicht.

3. Verfahren nach Anspruch 1 oder 2, wobei das Erzeugen des nicht-uniformen elektrischen Feldes das selektive Anlegen einer Spannung an das erste Elektrodenpaar (226-1) und das zweite Elektrodenpaar (226-2) umfasst.

4. Verfahren nach Anspruch 3, wobei das Erzeugen des nicht-uniformen elektrischen Feldes ferner das Variieren von mindestens einer von einer Frequenz und einer Amplitude der Spannung umfasst.

5. Verfahren nach einem der vorhergehenden Ansprüche, wobei das Erzeugen des nicht-uniformen elektrischen Feldes das Umkehren einer Polarität des ersten Elektrodenpaars (226-1) oder des zweiten Elektrodenpaars (226-2) umfasst.

6. Verfahren nach einem der vorhergehenden Ansprüche, wobei der Werkzeugpfad ein gekrümmtes Kühlloch (134; 234; 248) bildet.

7. Verfahren nach einem der vorhergehenden Ansprüche, wobei der Werkzeugpfad ein Spiralmuster (240) bildet.

8. Verfahren nach einem der vorhergehenden Ansprüche, und ferner umfassend: Montieren des Werkstücks (124; 224) in einem Halter (132) und Halten des Werkstücks (124; 224) stationär, während der Wasserstrahl (122; 222) auf das Werkstück (124; 224) aufprallt.

9. Verfahren nach einem der vorhergehenden Ansprüche, wobei die Ablenkung des Wasserstrahls (122; 222) dem Werkzeugpfad folgt.

10. Verfahren nach Anspruch 9, wobei das Erzeugen des nicht-uniformen elektrischen Feldes umfasst:
Anlegen einer Spannung an die mindestens eine Elektrode (126; 226-1, 226-2, 226-3); und
Steuern von mindestens einer von einer Amplitude oder einer Frequenz der Spannung.

11. Verfahren nach Anspruch 10, wobei die Spannung von 0 bis 1400 V reicht.

12. System (130) zum Bearbeiten eines Merkmals (138; 234; 248) in einem Werkstück (124; 224), wobei das System umfasst:
einen Halter (132) zum Sichern des Werkstücks (124; 224);
eine wasserstrahlgeführte Laservorrichtung (110; 210), die relativ zum Werkstück (124; 224) verschiebbar ist, wobei die wasserstrahlgeführte Laservorrichtung (110; 210) umfasst:
eine Düse (120) zum Ausstoßen eines Wasserstrahls (122; 222), wobei der Wasserstrahl (122; 222) einen Laserstrahl (112) umfasst; und
mindestens eine Elektrode (126; 226-1, 226-2, 226-3), die stromabwärts der Düse (120) angeordnet ist; und
ein Steuermodul (128), das operativ mit der wasserstrahlgeführten Laservorrichtung (110; 210) verbunden ist, um selektiv eine Spannung mit einer gewünschten Frequenz an die mindestens eine Elektrode (126; 226-1, 226-2, 226-3) anzulegen, um eine Ablenkung des Wasserstrahls (122; 222) entsprechend einem Werkzeugpfad zu bewirken,
**dadurch gekennzeichnet, dass**
die mindestens eine Elektrode (226-1, 226-2, 226-3) ein erstes Elektrodenpaar (226-1), das entlang einer ersten Achse (x) angeordnet ist, und ein zweites Elektrodenpaar (226-2), das entlang einer orthogonalen zweiten Achse (y) angeordnet ist, umfasst.

13. System nach Anspruch 12, wobei die Spannung von 0 bis 1400 reicht.

14. System nach einem der Ansprüche 12 oder 13, wobei die Spannung eine von einer Gleichspannung und einer gleichspannungsüberlagerten Wechselspannung ist.

## Revendications

1. Procédé d'usinage d'une caractéristique (134 ; 234 ; 248) dans une pièce à usiner (124 ; 224), le procédé comprenant :
l'orientation d'un dispositif laser guidé par jet d'eau (110 ; 210) autour de la pièce à usiner (124 ; 224) ;
l'éjection d'un jet d'eau (122 ; 222) à partir d'une buse (120) du dispositif laser guidé par jet d'eau (110 ; 210) ;
l'impact du jet d'eau (122 ; 222) contre la pièce à usiner (124 ; 224) le long d'une trajectoire d'outil provoquant une élimination correspondante de matière de celle-ci ; et
la génération d'un champ électrique non uniforme à proximité du jet d'eau (122 ; 222) pour provoquer une déviation du jet d'eau (122 ; 222) lorsque le jet d'eau (122 ; 222) frappe la pièce à usiner (124 ; 224), où la génération du champ électrique non uniforme comprend l'application sélective d'une tension à au moins une électrode (126 ; 226-1, 226-2, 226-3), l'au moins une électrode (126 ; 226-1, 226-2, 226-3) étant positionnée en aval de la buse (120),
**caractérisé en ce que**
l'au moins une électrode (226-1, 226-2, 226-3) comprend une première paire d'électrodes (226-1) disposée le long d'un premier axe (x) et une deuxième paire d'électrodes (226-2) disposée le long d'un deuxième axe orthogonal (y).

2. Procédé selon la revendication 1, dans lequel la tension varie de 0 V à 1400 V.

3. Procédé selon la revendication 1 ou 2, dans lequel la génération du champ électrique non uniforme comprend l'application sélective d'une tension à la première paire d'électrodes (226-1) et à la deuxième paire d'électrodes (226-2).

4. Procédé selon la revendication 3, dans lequel la génération du champ électrique non uniforme comprend en outre la variation d'au moins l'une d'une fréquence et d'une amplitude de la tension.

5. Procédé selon l'une quelconque des revendications précédentes, dans lequel la génération du champ électrique non uniforme comprend l'inversion d'une polarité de la première paire d'électrodes (226-1) ou de la deuxième paire d'électrodes (226-2).

6. Procédé selon l'une quelconque des revendications précédentes, dans lequel la trajectoire d'outil forme un trou de refroidissement courbe (134 ; 234 ; 248).

7. Procédé selon l'une quelconque des revendications précédentes, dans lequel la trajectoire d'outil forme un motif en spirale (240).

8. Procédé selon l'une quelconque des revendications précédentes, et comprenant en outre : le montage de la pièce à usiner (124 ; 224) dans un support (132) et le maintien de la pièce à usiner (124 ; 224) stationnaire pendant l'impact du jet d'eau (122 ; 222) contre la pièce à usiner (124 ; 224).

9. Procédé selon l'une quelconque des revendications précédentes, dans lequel la déviation du jet d'eau (122 ; 222) suit la trajectoire d'outil.

10. Procédé selon la revendication 9, dans lequel la génération du champ électrique non uniforme comprend :
l'application d'une tension à l'au moins une électrode (126 ; 226-1, 226-2, 226-3), et
le contrôle d'au moins l'une d'une amplitude ou d'une fréquence de la tension.

11. Procédé selon la revendication 10, dans lequel la tension varie de 0 à 1400 V.

12. Système (130) pour usiner une caractéristique (138 ; 234 ; 248) dans une pièce à usiner (124 ; 224), le système comprenant :
un support (132) pour fixer la pièce à usiner (124 ; 224) ;
un dispositif laser guidé par jet d'eau (110 ; 210) translatable par rapport à la pièce à usiner (124 ; 224),
le dispositif laser guidé par jet d'eau (110 ; 210) comprenant :
une buse (120) pour éjecter un jet d'eau (122 ; 222), le jet d'eau (122 ; 222) comprenant un faisceau laser (112) ; et
au moins une électrode (126 ; 226-1, 226-2, 226-3) disposée en aval de la buse (120), et
un module de commande (128) connecté de manière opérationnelle au dispositif laser guidé par jet d'eau (110 ; 210) pour appliquer sélectivement une tension à une fréquence souhaitée à l'au moins une électrode (126 ; 226-1, 226-2, 226-3) pour provoquer une déviation du jet d'eau (122 ; 222) correspondant à une trajectoire d'outil,
**caractérisé en ce que**
l'au moins une électrode (226-1, 226-2, 226-3) comprend une première paire d'électrodes (226-1) disposée le long d'un premier axe (x) et une deuxième paire d'électrodes (226-2) disposée le long d'un deuxième axe orthogonal (y).

13. Système selon la revendication 12, dans lequel la tension varie de 0 à 1400.

14. Système selon l'une quelconque des revendications 12 ou 13, dans lequel la tension est l'une d'une tension continue et d'une tension alternative polarisée en continu.
